# EUROPEAN PATENT APPLICATION

(11) **EP 1 806 648 A2**
(43) Date of publication of application: **11.07.2007**
(21) Application number: 06076918.9
(22) Date of filing: 24.10.2006
(51) Int. Cl.: G06F 3/048

(54) **Display apparatus, display system and control method thereof**

(30) Priority: 05.12.2005 KR 20050117546
(71) Applicant: Samsung Electronics Co., Ltd., Suwon-si, Gyeonggi-Do (KR)
(72) Inventor: Park, Heung-jun, Hyundai Home Town No. 102-1301, Suwon-si Gyeonggi-do (KR); Kim, Young-chan, Uiwang-si Gyeonggi-do (KR)
(74) Representative: Hylarides, Paul Jacques

(57) **Abstract**

A display apparatus having a multi-screen displaying mode to display a plurality of images, the display apparatus includes: a displaying part displaying an image; a location detecting part detecting location information pointed on the displaying part through a predetermined pointing device; and a controller adjusting the location information detected through the location detecting part, on a basis of an activating area of a tablet function according to a selected displaying mode when the multi-screen displaying mode is selected.

## Description

### CROSS-REFERENCE TO RELATED APPLICATIONS

This application claims the benefit of Korean Patent Application No. P2005-0117546, filed on December 5, 2005, in the Korean Intellectual Property Office, the disclosure of which is incorporated herein by reference.

### BACKGROUND OF THE INVENTION

### Field of the Invention

The present invention relates to a display apparatus, a display system and a control method thereof, and more particularly, to a display apparatus, a display system and control method thereof having a tablet function.

### Description of the Related Art

Generally, an apparatus having a tablet function, which is differently called as a digitizer, detects a location of a pen or a finger on a display panel and outputs the location by a coordinate value. This tablet apparatus can input characters or images more conveniently and precisely than a conventionally used keyboard, a mouse, a scanner etc.

For a display apparatus having a conventional tablet function, when a multi-screen displaying mode such as a PIP (picture in picture) mode, a PBP (picture by picture) mode, a POP (picture out picture) mode is operated to display a plurality of image sources at the same time, an error may occur between a tablet coordinate value that is previously set up and a location of data that are really drawn.

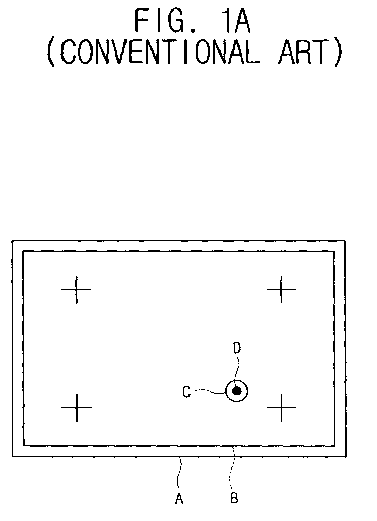

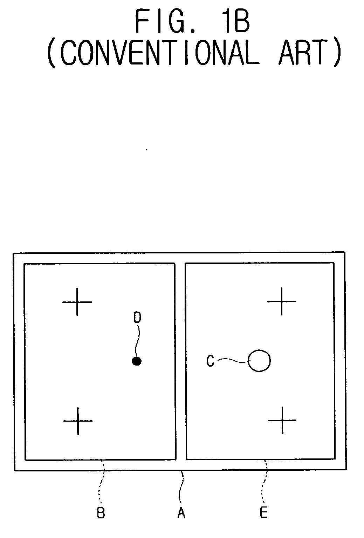

The display apparatus having a conventional tablet function will be described with reference to FIG. 1a and 1b. FIG. 1a and 1b illustrate a screen of a display apparatus according to a tablet function.

As shown in FIG. 1a, the letter A indicates the whole screen area, the letter B indicates the area applied by a tablet function, the letter C indicates the point by a pointing device and the letter D indicates the point of an image displayed according to the pointing. In a general screen mode, D coincides with C. That is, a coordinate value of C pointed by the pointing device coincides with a coordinate value of D of a corresponding image thereof displayed.

However, as shown in FIG. 1b, when the screen is converted to a PBP mode, the C coordinate value pointed by the pointing device does not coincide with the D coordinate of the image thereof displayed because an area where a tablet function is activated is reduced by half. That is, in case that the pointing device points at the point C of the screen E where the tablet function is not activated in FIG. 1b, the corresponding image thereof is displayed on the point D of the screen B.

It may be inconvenient for a user to calibrate coordinate values one by one so that the C and D coordinate values coincides with each other.

### SUMMARY OF THE INVENTION

Accordingly, it is an aspect of the present invention to provide a display apparatus, a display system and a control method thereof to automatically adjust location information so that a location pointed by a pointing device coincides with a corresponding displaying location of an image signal thereof when a displaying mode is converted into a multi-screen displaying mode.

Additional aspects and/or advantages of the present invention will be set forth in part in the description which follows and, in part, will be obvious from the description, or may be learned by practice of the present invention.

The foregoing and/or other aspects of the present invention are also achieved by providing a display apparatus having a multi-screen displaying mode to display a plurality of images, the display apparatus comprising: a displaying part displaying an image; a location detecting part detecting location information pointed on the displaying part through a predetermined pointing device; and a controller adjusting the location information detected through the location detecting part, on a basis of an activating area of a tablet function according to a selected displaying mode when the multi-screen displaying mode is selected.

According to another aspect of the present invention, the controller adjusts the location information so that a location pointed through the pointing device coincides with a displaying location of an image signal corresponding to the location information, on the basis of a size and a location of the activating area of the tablet function according to the selected multi-screen displaying mode.

According to another aspect of the present invention, the multi-screen displaying mode comprises at least one mode among PIP, PBP and POP mode.

According to another aspect of the present invention, the location detecting part comprises a sensor part receiving a pointing signal generated according to contact of the pointing device with the displaying part, and a location outputting part calculating the location information on the basis of the pointing signal.

According to another aspect of the present invention, the display apparatus further comprises a memory where a set-up coordinate of the displaying location of the displaying part is stored, wherein the location outputting part calculates the location information on the basis of the set-up coordinate.

According to another aspect of the present invention, the pointing signal, which is generated by the pointing device, comprises an ultrasonic signal and/or an infrared signal; and the sensor part comprises an ultrasonic signal sensor and/or an infrared signal sensor.

According to another aspect of the present invention, the display apparatus further comprises a protecting window contacted by the pointing device in a front of the displaying part.

The foregoing and/or other aspects of the present invention are also achieved by providing a display system having a multi-screen displaying mode to display a plurality of images, the display system comprising: a signal source providing an image signal; a displaying part receiving the image signal and displaying; a pointing device; a location detecting part detecting location information pointed on the displaying part through the pointing device; and a controller adjusting the location information detected through the location detecting part, on the basis of an activating area of a tablet function in accordance with a selected displaying mode according to whether the multi-screen displaying mode is selected.

According to another aspect of the present invention, the multi-screen displaying mode comprises at least one mode among PIP, PBP and POP mode.

According to another aspect of the present invention, the controller adjusts the location information so that a location pointed by the pointing device coincides with a displaying location of an image signal corresponding to the location information, on the basis of a size and a location of the activating area of the tablet function according to the selected multi-screen displaying mode; the signal source generates the image signal corresponding to the adjusted location information and provides the image signal to the displaying part.

According to another aspect of the present invention, the location detecting part comprises a sensor part receiving a pointing signal generated according to contact of the pointing device with the displaying part, and a location outputting part calculating the location information on a basis of the pointing signal.

According to another aspect of the present invention, the display system further comprises a memory where a set-up coordinate of the displaying location of the displaying part is stored; and wherein the location outputting part calculates the location information on the basis of the set-up coordinate.

According to another aspect of the present invention, the displaying part, the location detecting part, the controller and the memory are equipped in a display apparatus.

According to another aspect of the present invention, the pointing device generates the pointing signal; the pointing signal comprises an ultrasonic signal and/or an infrared signal; and the sensor part comprises an ultrasonic signal sensor and/or an infrared signal sensor.

The foregoing and/or other aspects of the present invention are also achieved by providing a control method of a display apparatus having a displaying part displaying an image and a location detecting part detecting location information pointed through a predetermined pointing device, the control method comprising: determining whether a multi-screen displaying mode displaying a plurality of images on the displaying part is selected; and adjusting the location information detected through the location detecting part, on the basis of an activating area of a tablet function in accordance with a selected displaying mode according to whether the multi-screen displaying mode is selected.

According to another aspect of the present invention, the multi-screen displaying mode comprises at least one mode among PIP, PBP and POP mode.

According to another aspect of the present invention, the adjusting the location information comprises adjusting, the location information so that a location pointed through the pointing device coincides with a displaying location of an image signal corresponding to the location information, on the basis of a size and a location of the activating area of the tablet function according to the selected multi-screen displaying mode

According to another aspect of the present invention, the detecting the location information comprises receiving a pointing signal generated according to contact of the pointing device with the displaying part, and calculating the location information on a basis of the pointing signal.

### BRIEF DESCRIPTION OF THE DRAWINGS

The above and/or other aspects and advantages of the present invention will become apparent and more readily appreciated from the following description of the embodiments, taken in conjunction with the accompanying drawings of which:
FIG. 1A and 1B are schematic views to explain changes of coordinate values in a tablet function when a PBP function is operated in a conventional display apparatus.
FIGS. 2 and 4 are a control block diagram and a control flowchart of a display apparatus and a display system including the display apparatus according to an exemplary embodiment of the present invention.
FIG. 3A, 3B, and 3C are schematic views to explain how to adjust coordinate values in a tablet function when a PBP function is operated in a display apparatus according to an exemplary embodiment of the present invention.

### DETAILED DESCRIPTION OF THE PREFERRED EMBODIMENT

Reference will now be made in detail to the embodiments of the present invention, examples of which are illustrated in the accompanying drawings, wherein like reference numerals refer to like elements throughout.

Hereinafter, an exemplary embodiment of the present invention will be described in detail with reference to Figures below. A computer will be described as an example of a signal source hereinafter.

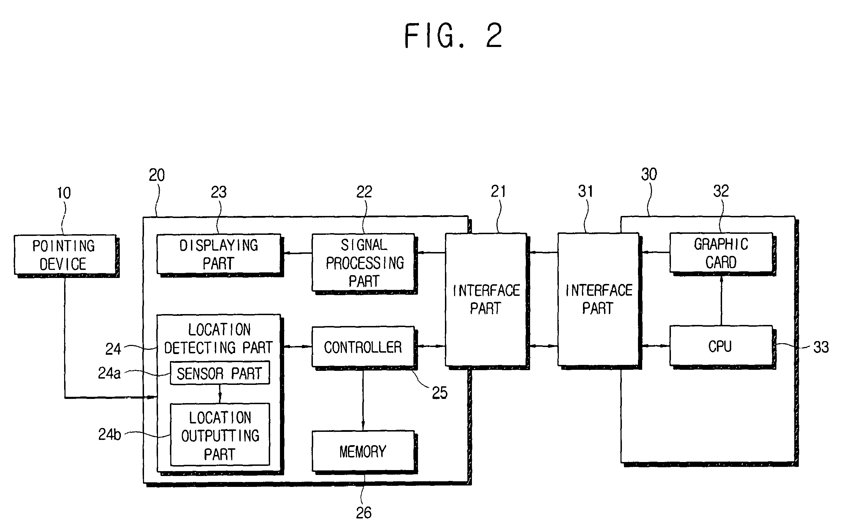

As illustrated in FIGS. 2A and 2B, a display system according to an exemplary embodiment of the present invention comprises a pointing device 10, a display apparatus 20 and a computer 30.

The pointing device 10 points at an arbitrary point of an image displayed on a displaying part 23. The pointing device 10 may comprise a pen special-devised by a stylus way, a mouse pen, a general pen or a thing having a protrusive part like a general pen. Also, in a finger touch method, a point on a touch pad can be pointed by using a human's finger. An example of a special-devised pen may comprise a pen that generates an ultrasonic signal and/or an infrared signal in case of contacting the displaying part 23.

The display apparatus 20 according to an exemplary embodiment of the present invention comprises an interface part 21, a signal processing part 22, the displaying part 23, a location detecting part 24 and a controller 25. The computer 30 comprises an interface part 31 exchanging data with the display apparatus 20, a graphic card 32 and a CPU 33.

A concerned driver operating a tablet function and an executable program thereof are installed in the computer 30 according to an exemplary embodiment of the present invention.

An image signal generated through the graphic card 32 of the computer 30 is transmitted to the display apparatus 20 through the interface part 31. The signal processing part 22 of the display apparatus 20 converts the image signal inputted from the computer 30 into a format capable for the displaying part 23 to display, for example, an LVDS (low voltage differential signaling) format, and outputs the converted image to the displaying part 23 through an LVDS connector (not shown).

The interface parts 21 and 31 for data transmission between the computer 30 and the display apparatus 20 may be realized by a D-Sub, a DVI (digital visual/video interactive), a HDMI (high definition multimedia interface) connector, etc.

The signal processing part 22 may have various additional functions suitable for the various formats of the inputted image signal. For example, the additional functions may comprise an A/D converting function and a digital decoding function converting image signals inputted by various formats into digital image signals by a predetermined format, a scaling function adjusting a vertical frequency, a resolution, a screen ratio etc. to meet a display standard of the displaying part 23 after receiving a digital image signal and an LVDS format converting function. At this time, the signal processing part 22 comprises a processing module allowing operation modes in a PIP mode, a PBP mode and a POP mode that process and display signals from a plurality of sources at the same time.

In the meanwhile, the displaying part 23 according to an exemplary embodiment of the present invention may be applied to various types of display modules such as DLP (digital light processing), LCD (liquid crystal display), PDP (plasma display panel), etc.

The location detecting part 24 detects location information pointed by the pointing device 10 according to a predetermined set-up coordinate value and may be realized by a touch panel. Herein, the location detecting part 24 comprises a sensor part 24a receiving a pointing signal generated by contact of the pointing device 10 with the displaying part 23 and a location outputting part 24b calculating location information with the received pointing signal.

Here, the sensor part 23a may comprise a panel layered with transparent resistive films for detecting a coordinate value, or two resistive sheets separated by a spacer and to be contacted by pressure with each other, which is arranged on a front face of the displaying part 23, and a sensor receiving a signal generated according to a contacted or pressed location when an A/C or a DC signal is applied at the panel or sheets.

In the meanwhile, the sensor part 24a may be constructed with an ultrasonic and/or an infrared sensor receiving a concerned signal when using a pen as the pointing device 10 generating an ultrasonic and/or an infrared signal. At this time, a protecting window for protecting damage by a contact of the pen may be arranged in a front of the displaying part 23.

The location outputting part 24b calculates location information pointed by the pointing device 10 by sensing the strength and/or a time lag of the signal received through the sensor part 24a,. A method of calculating location information in the location outputting part 24b may be realized differently according to kinds of the sensor part 24a described above.

At this time, the location outputting part 24b calculates location information pointed by the pointing device 10 according to a predetermined set-up coordinate value, which will be described below.

When a displaying mode of the display apparatus 20 is converted into a multi-screen displaying mode displaying a plurality of images, the controller 25 adjusts location information outputted from the location detecting part 24 on the basis of a tablet activating area corresponded with a selected displaying mode and transmits the location information to the computer 30. The controller 25 may be realized with software algorithm and/or a micro controller.

In detail, when the displaying mode is converted into the multi-screen displaying mode, the controller 25 determines a size and a location of the tablet activating area according to the selected displaying mode, and adjusts location information thereby so that a location pointed by the pointing device 10 coincides with a displaying location of an image signal thereof. Thus, the location information calculated from the location outputting part 24b is adjusted by the controller 25 and provided to the computer 30. The computer 30 transmits an image signal corresponding to the adjusted location information. At this time, the location information is transmitted through the interface part 21. The location information may be transmitted through a USB (universal serial bus) interface, serial interface or any other interface suitable to transmit the location.

The CPU 33 of the computer 30 controls the graphic card 32 to generate an image signal through a calculation and processing according to the provided location information.

The image signal generated by the graphic card 32 is provided to the signal processing part 22 through the interface parts 21 and 31. The image signal undergoes a signal processing and is displayed on the displaying part 23.

Thus, a location pointed by the pointing device 10 coincides with a location drawn through the displaying part 23.

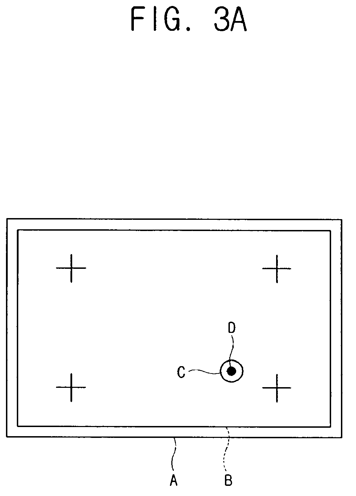

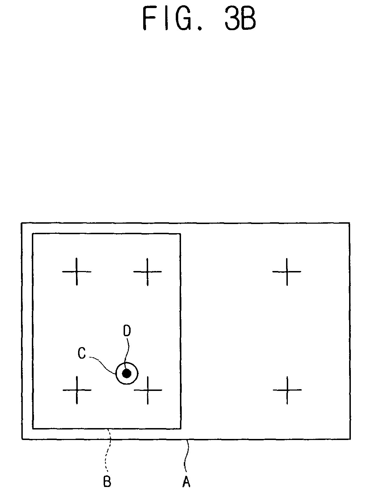

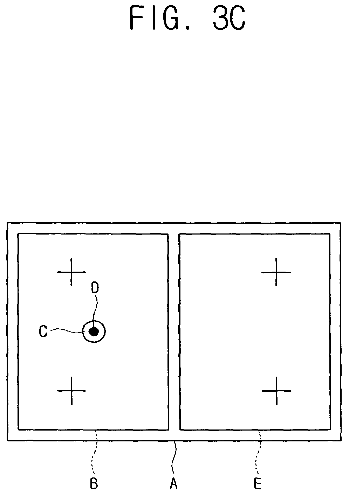

A method to coincide a pointed location of the pointing device 10 with a displaying location of an image thereof according to an exemplary embodiment of the present invention will be described with reference to FIG. 3A through 3C.

As shown in FIG. 3a, the letter A indicates the whole screen area, the letter B indicates the area applied by a tablet function, the letter C indicates the point by a pointing device and the letter D indicates the point of an image displayed according to pointing. As illustrated, in a simple screen displaying mode, a C coordinate value pointed by the pointing device 10 coincides with a D coordinate value of an image thereof displayed.

When the screen displaying mode is converted into a PBP mode (with aspect ratio 1:1), as shown in FIG. 3B, an area where a tablet function is activated occupies the left part and the area is reduced by half. The remaining area of the screen is inactivated so that even if the user touches the remaining area, the system ignores the touch. At this time, the controller 25 coincides the point C (on the left part of the screen) pointed by the pointing device 10 with the point D displayed according to the point C.

That is, the controller 25 can coincides the point C (on the left part of the screen) pointed by the pointing device 10 with the point D as shown in FIG. 3C by correctly adjusting location information outputted by the location detecting part 24 suitable for the converted mode and providing the location information to the computer 30. Without the adjustment, since the location of the point C in terms of the entire screen is different than the location of the point within the left screen, the detected position within the left screen will not correspond to the actual image touched by the user. Again, even if the pointing device 10 points at an arbitrary point of the screen E where a tablet function is not activated, the system ignores the input.

For example, suppose that a screen displaying mode is converted into a PBP mode (with aspect ratio 1:1) displaying together with a signal from a TV, in the middle of operating a tablet function by receiving an image signal having a resolution of 1054*720 from a computer. At this time, if the aspect ratio of a PBP screen is maintained (that is, the width is reduced by half, and the height is maintained as it is), when the coordinate value (100, 50) pointed by the pointing device 10 in a simple displaying mode is detected, the same location is adjusted as the coordinate value (200, 50) in the PBP mode and is outputted to the computer. Thus, the location pointed by the pointing device 10 coincides with a location pictured by the displaying part 23.

The display apparatus 20 according to an exemplary embodiment of the present invention may further comprise a memory 26 in which a predetermined set-up coordinate value of the location detecting part 24 is stored. The set-up coordinate value means a user calibrated coordinate value when a tablet function is firstly installed. The location outputting part 24b and the controller 25 calculates and adjusts location information on the basis of the set-up coordinate value. That is, according to the set-up coordinate value, the location information detecting part 24 outputs location information corresponding to a pointed location.

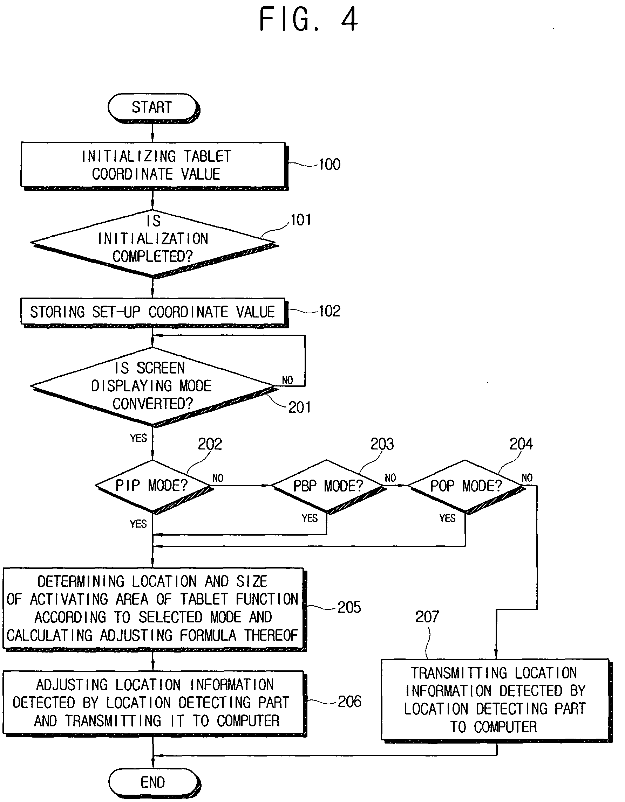

The control method of the display system according to an exemplary embodiment of the present invention will be described with reference to FIG. 4.

In a first installment of a tablet function, a tablet coordinate value is initialized (100). Thus, in a first installment of a tablet function, a signal source i.e. the computer 30 provides a predetermined pattern image, and the displaying part 20 displays the provided image on a screen.

A user points at a point through the pointing device 10, and the display apparatus 20 provides the pointed location to the computer 30. The computer 30 sets up a coordinate value according to the provided location and provides the coordinate value to the display apparatus 20. The display apparatus 20 sets up a tablet coordinate according to the set-up coordinate value.

When an initialization is completed through operations above (101), the set-up coordinate value provided from the computer 30 is stored in the memory 26 (102) and a next tablet function is operated on the basis of the set-up coordinate value. A first set-up process of the coordinate is required to set up an initial function. When it is necessary to change the set-up coordinate value, for example, in case of a change in a display mode, the first set-up process of coordinate can be performed by a user selection.

If a screen displaying mode is converted (201), the controller 25 may determine whether the converted mode is a PDP mode (202), a PBP mode (203) or a PIP mode (204).

The controller 25 determines a location and a size of an activating area of a tablet function according to a selected mode to calculate an adjusting formula thereof (205). At this time, the adjusting formula considers the location and the size of the activating area of the tablet function.

When the location detecting part 24 outputs location information pointed by the pointing device 10, the controller 25 adjusts the outputted location information according to the outputted adjusting formula and transmits it to the computer 30 (206).

If a multi-screen displaying mode is not selected, the location information outputted from the location detecting part 24 is transmitted to the computer 30 without undergoing the adjusting process (207).

Thus, the computer 30 generates an image according to a concerned location and transmits the image to the display apparatus 20. The display apparatus 20 displays the image corresponding to the location pointed by the pointing device 10. The point by the pointing device 10 coincides with the point of the image displayed.

As described above, according to the present invention, there is provided a display apparatus, a display system and a control method thereof to automatically adjust location information so that a location pointed by a pointing device coincides with a displaying location of an image signal thereof when a displaying mode is converted into a multi-screen displaying mode.

Although a few embodiments of the present invention have been shown and described, it will be appreciated by those skilled in the art that changes may be made in these embodiments without departing from the principles and spirit of the invention, the scope of which is defined in the appended claims and their equivalents.

## Claims

1. A display apparatus having a multi-screen displaying mode to display a plurality of images, the display apparatus comprising:
a displaying part displaying an image;
a location detecting part detecting location information pointed on the displaying part through a predetermined pointing device; and
a controller adjusting the location information detected through the location detecting part, on a basis of an activating area of a tablet function according to a selected displaying mode when the multi-screen displaying mode is selected.

2. The display apparatus according to claim 1, wherein the controller adjusts the location information so that a location pointed through the pointing device coincides with a displaying location of an image signal corresponding to the location information, on the basis of a size and a location of the activating area of the tablet function according to the selected multi-screen displaying mode.

3. The display apparatus according to claim 2, wherein the multi-screen displaying mode comprises at least one mode among PIP, PBP and POP mode.

4. The display apparatus according to claim 3, wherein the location detecting part comprises a sensor part receiving a pointing signal generated according to contact of the pointing device with the displaying part, and a location outputting part calculating the location information on the basis of the pointing signal.

5. The display apparatus according to claim 4, further comprising a memory where a set-up coordinate of the displaying location of the displaying part is stored,
wherein the location outputting part calculates the location information on the basis of the set-up coordinate.

6. The display apparatus according to claim 4, wherein the pointing signal, which is generated by the pointing device, comprises an ultrasonic signal and/or an infrared signal; and
the sensor part comprises an ultrasonic signal sensor and/or an infrared signal sensor.

7. The display apparatus according to claim 6, further comprising a protecting window contacted by the pointing device in a front of the displaying part.

8. The display apparatus according to claim 2, wherein the location detecting part comprises a sensor part receiving a pointing signal generated according to contact of the pointing device with the displaying part, and a location outputting part calculating the location information on a basis of the pointing signal.

9. The display apparatus according to claim 8, further comprising a memory where a setting-up coordinate of a displaying location of the displaying part is stored,
wherein the location outputting part calculates the location information on a basis of the set-up coordinate.

10. The display apparatus according to claim 8, wherein the pointing signal, which is generated by the pointing device, comprises an ultrasonic signal and/or an infrared signal; and
the sensor part comprises an ultrasonic signal sensor and/or an infrared signal sensor.

11. The display apparatus according to claim 10, further comprising a protecting window contacted by the pointing device in a front of the displaying part.

12. A display system, preferably comprising a display apparatus according to any of the preceding claims, the display system having a multi-screen displaying mode to display a plurality of images, the display system comprising:
a signal source providing an image signal;
a displaying part receiving the image signal and displaying;
a pointing device;
a location detecting part detecting location information pointed on the displaying part through the pointing device; and
a controller adjusting the location information detected through the location detecting part, on the basis of an activating area of a tablet function in accordance with a selected displaying mode according to whether the multi-screen displaying mode is selected.

13. The display system according to claim 12, wherein the multi-screen displaying mode comprises at least one mode among PIP, PBP and POP mode.

14. The display system according to claim 13, wherein the controller adjusts the location information so that a location pointed by the pointing device coincides with a displaying location of an image signal corresponding to the location information, on the basis of a size and a location of the activating area of the tablet function according to the selected multi-screen displaying mode;
the signal source generates the image signal corresponding to the adjusted location information and provides the image signal to the displaying part.

15. The display system according to claim 14, wherein the location detecting part comprises a sensor part receiving a pointing signal generated according to contact of the pointing device with the displaying part, and a location outputting part calculating the location information on a basis of the pointing signal.

16. The display system according to claim 15, further comprising a memory where a set-up coordinate of the displaying location of the displaying part is stored; and
wherein the location outputting part calculates the location information on the basis of the set-up coordinate.

17. The display system according to claim 16, wherein the displaying part, the location detecting part, the controller and the memory are equipped in a display apparatus.

18. The display system according to claim 15, wherein the pointing device generates the pointing signal;
the pointing signal comprises an ultrasonic signal and/or an infrared signal; and
the sensor part comprises an ultrasonic signal sensor and/or an infrared signal sensor.

19. The display system according to claim 13, wherein the location detecting part comprises a sensor part receiving a pointing signal generated according to contact of the pointing device with the displaying part, and a location outputting part calculating the location information on a basis of the pointing signal.

20. The display system according to claim 19, further comprising a memory where a set-up coordinate of a displaying location of the displaying part is stored; and
wherein the location outputting part calculates the location information on a basis of the set-up coordinate.

21. The display system according to claim 20, wherein the displaying part, the location detecting part, the controller and the memory are equipped in a display apparatus.

22. The display system according to claim 19, wherein the pointing device generates the pointing signal;
the pointing signal comprises an ultrasonic signal and/or an infrared signal; and
the sensor part comprises an ultrasonic signal sensor and/or an infrared signal sensor.

23. A control method of a display apparatus, preferably an apparatus as claimed in any of claims 1-11, the apparatus having a displaying part displaying an image and a location detecting part detecting location information pointed through a predetermined pointing device, the control method comprising:
determining whether a multi-screen displaying mode displaying a plurality of images on the displaying part is selected; and
adjusting the location information detected through the location detecting part, on the basis of an activating area of a tablet function in accordance with a selected displaying mode according to whether the multi-screen displaying mode is selected.

24. The control method of the display apparatus according to claim 23, wherein the multi-screen displaying mode comprises at least one mode among PIP, PBP and POP mode.

25. The control method of the display apparatus according to claim 24, wherein the adjusting the location information comprises adjusting, the location information so that a location pointed through the pointing device coincides with a displaying location of an image signal corresponding to the location information, on the basis of a size and a location of the activating area of the tablet function according to the selected multi-screen displaying mode

26. The control method of the display apparatus according to claim 25, wherein the detecting the location information, comprises receiving a pointing signal generated according to contact of the pointing device with the displaying part, and calculating the location information on a basis of the pointing signal.
